**Europäisches Patentamt**

(19) **European Patent Office**

**Office européen des brevets**

(11) Publication number : **0 398 409 B1**

# (12) EUROPEAN PATENT SPECIFICATION

(45) Date of publication of patent specification :
**14.07.93 Bulletin 93/28**

(21) Application number : **90201113.9**

(22) Date of filing : **03.05.90**

(51) Int. Cl.⁵ : **A23D 9/00, A23L 1/24**

(54) Fatty composition.

(30) Priority : **16.05.89 EP 89201211**

(43) Date of publication of application :
**22.11.90 Bulletin 90/47**

(45) Publication of the grant of the patent :
**14.07.93 Bulletin 93/28**

(84) Designated Contracting States :
**AT BE CH DE DK ES FR GB GR IT LI NL SE**

(56) References cited :
**EP-A- 0 375 239**
**US-A- 3 600 186**
**US-A- 3 963 699**
**US-A- 4 005 196**
**US-A- 4 508 746**
**PATENT ABSTRACTS OF JAPAN, vol. 4, no. 151 (C-28)[633], 23rd October 1980; & JP-A-55 096 075 (AJINOMOTO CO. INC.) 21-07-1980 IDEM**

(73) Proprietor : **UNILEVER N.V.**
**Weena 455**
**NL-3013 AL Rotterdam (NL)**
㊴ **BE CH DE DK ES FR GR IT LI NL SE AT**
Proprietor : **UNILEVER PLC**
**Unilever House Blackfriars P.O. Box 68**
**London EC4P 4BQ (GB)**
㊴ **GB**

(72) Inventor : **Decio, Maurizio**
**Prinses Beatrixlaan 285**
**NL-2284 AK Rijswijk (NL)**
Inventor : **Van Oosten, Cornelis Willem**
**Lindendreef 145**
**NL-3137 CL Vlaardingen (NL)**

(74) Representative : **Mulder, Cornelis Willem Reinier, Dr. et al**
**UNILEVER N.V. Patent Division P.O. Box 137**
**NL-3130 AC Vlaardingen (NL)**

## Description

FATTY COMPOSITION

The present invention is concerned with a fatty composition containing unrefined olive oil in combination with another refined fatty substance.

Unrefined olive oil, also called virgin olive oil, can be obtained simply through pressing olives and squeezing out the oil. Other techniques to obtain unrefined olive oil, such as for instance centrifugation, are known in the art. The unrefined olive oil so obtained has a strong olive flavour which is highly appreciated in, for instance, salad oils. Since the flavour of unrefined olive oil is very strong it is normally diluted with refined olive oil so as to obtain a salad oil that has a very pleasant olive flavour. It is also known to blend unrefined olive oil with vegetable oils other than olive oil, yielding a product of a lesser quality.

By refined oils whenever referred in this specification are meant oils that have been subjected to refining techniques such as extraction, distillation and contacting with adsorbent. Refined oils as referred to in here are essentially odourless as a direct result of the removal of flavour components in the refining process.

Compared to other triglyceride oils, olive oil (including refined and unrefined olive oil as well as mixtures thereof) is characterized by its relatively thick mouthfeel. Consequently salad oils prepared on the basis of unrefined olive oil and refined triglyceride fats other than olive oil, have a mouthfeel that is clearly different from high quality olive oil based salad oils. Futhermore salad oils containing unrefined olive oil in combination with refined triglyceride fats other than olive oil were found to lack the retarded flavour impression generally observed in high quality olive oil based salad oils.

We have now found a very good substitute for fatty compositions containing in combination unrefined and refined olive oil, namely a fatty composition containing unrefined olive oil in combination with polyol fatty acid polyesters and optionally refined triglyceride oil.

Accordingly the present invention is concerned with a fatty composition containing more than 50 wt.% fat, comprising, calculated by weight of fat:

(a) 0.5 to 40 % unrefined olive oil;
(b) 5 to 80 %, preferably 15 to 80 % polyol fatty acid polyesters; and optionally
(c) less than 94.5 % refined triglyceride oil.

The fatty compositions according to the invention were found to have a mouthfeel that is very much alike that of olive oil. Futhermore, surprisingly, the long aftertaste, which is characteristic of olive oil based salad oils, is also observed for the combination of polyol fatty acid polyesters and unrefined olive oil. When unrefined olive oil is mixed with substantial amounts of non-olive-oil triglyceride oils the prolonged aftertaste is lost.

EP-A 287 157 is concerned with frying mediums containing sugar polyesters and from 0% to about 65% other frying medium ingredients such as triglyceride oils. Amongst a list of 33 suitable sources for such oils olive is mentioned. Essentially the same enumeration of suitable sources as in EP-A 287 157 is found in EP-A 0 290 065 which relates to food or beverage compositions having an altered flavor display.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated or modified otherwise, as well as non-toxic fatty materials having properties similar to triglycerides, which materials may be indigestible, such as for example waxes, e.g. jojoba oil and hydrogenated jojoba oil, and polyol fatty acid polyesters referred to hereinafter in more detail. The terms fat and oil are used interchangeably.

The term 'polyol' is intended to refer to any aliphatic or aromatic compound which comprises at least four free hydroxyl groups. Such polyols in particular include the group of sugar polyols, which comprises the sugars, i.e. the mono-, di-and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used sugar polyol is sucrose.

In this specification the term 'polyol fatty acid polyester' is intended to refer to any such polyesters or mixtures thereof of which, on an average, more than 70 % of the polyol hydroxyl groups have been esterified with fatty acids. By 'indigestible' is meant that at least about 70 % by weight of the material concerned is not digested by the human body.

In a preferred embodiment of the present invention the composition comprises, calculated by weight of fat:

(a) 0.8 to 25 % unrefined olive oil;
(b) 15 to 50 % polyol fatty acid polyesters; and optionally

(c) less than 74.2 % of refined triglyceride oil.

It was found that the introduction of substantial amounts of polyol fatty acid polyesters can increase the thickness of the composition to such a level that its mouthfeel is even thicker than that of pure olive oils. The thickness can be adjusted to the desired level by the introduction of a suitable amount of less thick triglyceride oil. Accordingly in a very preferred embodiment of the invention the composition comprises, calculated by weight of fat:

(a) 1.0 to 23 % unrefined olive oil;

(b) 16 to 45 % polyol fatty acid polyesters; and

(c) 32 to 83 % refined triglyceride oil.

The present invention enables the preparation of fatty compositions containing reduced levels of olive oil, while retaining the characteristics of olive oil. Preferably the refined triglyceride oil present in the fatty composition according to the invention comprises less than 80 wt.% of refined olive oil. More preferably the triglyceride oil comprises less than 60 wt.% of refined olive oil.

The advantages of the present invention are particularly appreciated in compositions containing more than 90 wt.% fat. An example of a fatty composition having so high a fat content is salad oil. The salad oils according to the present invention preferably have a clearly perceptible colour, ranging from green to brown.

The unrefined olive oil present in the fatty composition preferably has an acidity expressed as free oleic acid of less 3 wt.%, more preferably of less than 2 wt.%. The refined triglyceride oil employed in the present composition preferably is a low melting oil having a slip melting point of less than 20°C, preferably of less than 12°C.

In a very preferred embodiment of the present invention the fatty composition at a temperature of 20°C is a transparent liquid displaying essentially no crystalline fat in the form of solid fat particles that are perceptible to the eye.

Another aspect of the present invention is the use of polyol fatty acid polyesters as a replacement for refined olive oil in olive oil based fatty compositions which contain from 0.5 to 40% of unrefined olive oil.

Yet another aspect of the present invention is the use of a fatty composition according to the invention described hereinbefore as a salad oil. By use as a salad oil is meant any use that does not involve heating to high temperatures, i.e. temperatures above 120°C.

The invention is further illustrated by means of the following examples:

Example 1

Four salad oils A, B, C and D were prepared from the following ingredients (in wt.% on product):

|  | Salad Oil | | | |
|---|---|---|---|---|
|  | A | B | C | D |
| Dante[TM] Extravergine Oliva [1] | 10 | 10 |  | 10 |
| Sunflower oil | 90 | 54 | 100 |  |
| Sucrose fatty acid polyester [2] |  | 36 |  |  |
| Dante[TM] Olio Oliva [3] |  |  |  | 90 |

[1] Unrefined olive oil ex. van de Bergh & Jurgens, Crema, Italy.

[2] Sucrose fatty acid polyester obtained by esterification of sucrose with fatty acids derived from soybean oil; degree of esterification over 95 %

[3] Commercial olive oil ex. van de Bergh & Jurgens, Crema, Italy (containing about 10 wt.% extra virgin olive oil)

A panel of 14 people who were untrained in the evaluation of salad oils, was asked to taste the four salad oils and rate the aftertaste and thickness of the mouthfeel on a scale ranging from 0 to 100, the higher values corresponding with a longer aftertaste and a higher thickness. Previously the panel members had been given the opportunity to twice taste salad oils C and D, together with the information that salad oil C was of a very low viscosity and that salad oil D was very viscous and had a long aftertaste. The samples were tested under yellow light in order to mask colour differences resulting from the introduction of slightly green coloured unrefined olive oil.

Thus the following figures for the mean scores were obtained:

|  | Aftertaste | Thickness |
|---|---|---|
| Salad oil A | 41.3 | 30.6 |
| Salad oil B | 63.7 | 43.2 |
| Salad oil C | 37.4 | 27.0 |
| Salad oil D | 60.2 | 60.9 |

The figures indicate that the replacement of part of the sunflower oil with sucrose fatty acid polyester results in a prolongation of the aftertaste and an increase in thickness. Furthermore it can be derived from the above figures that salad oil B had an aftertaste that was very similar to that of reference D, i.e. a high quality olive oil based salad oil.

Example 2

Three salad oils were prepared from the following ingredients (in % by weight of product):

|  | Salad oil | | |
|---|---|---|---|
|  | A | B | C |
| Dante™ Extravergine Oliva [1] | 10 | 10 | 10 |
| Dante™ Olio Oliva [2] | 90 | | |
| Sunflower oil | | 90 | 50 |
| Sucrose fatty acid polyester [3] | | | 40 |

[1] Unrefined olive oil ex. van de Bergh & Jurgens, Crema, Italy.

[2] Commercial olive oil ex. van de Bergh & Jurgens, Crema, Italy (containing about 10 wt.% extra virgin olive oil)

[3] Sucrose fatty acid polyester obtained by esterification of sucrose with fatty acids derived from soybean oil; degree of esterification over 95 %

Salad oil A was given to a test panel as a reference sample having a long aftertaste. Next the test panel was asked to indicate which of the salad oils B and C had the longest aftertaste. All panel members were of the opinion that salad oil C had the longest aftertaste.

Example 3

Three salad oils were prepared from the following ingredients ( in % by weight of the salad oil):

|  | Salad oil | | |
| --- | --- | --- | --- |
|  | A | B | C |
| Dante<sup>TM</sup> Extravergine Oliva [1] | 10 | 10 | 10 |
| Refined olive oil | 90 | | |
| Sunflower oil | | 90 | 50 |
| Sucrose fatty acid polyester [2] | | | 40 |

[1] Unrefined olive oil ex. van de Bergh & Jurgens, Crema, Italy.

[2] Sucrose fatty acid polyester obtained by esterification of sucrose with fatty acids derived from soybean oil; degree of esterification over 95 %

The three oils were tested by a panel composed of 6 persons who were used to evaluating flavours. The members of the panel were asked to rank the oils in order of viscosity and in order of length of aftertaste. All panel members were of the opinion that sample B scored lowest in aftertaste and viscosity, i.e. it did not have a lasting aftertaste and was found to have a low viscosity. Sample C was found to produce a longer aftertaste and a somewhat more viscous mouthfeel than sample A.

The viscosity of the three oils was measured by means of a Haake ™ viscometer, provided with: Rotovisco RV 100, System CV 100 and Sensor system ZC 15. The conditions/adjustments employed were:

$t_1 = 0$

$t_3 = 0.1$

|  | I | II |
| --- | --- | --- |
| measurement temperature (°C) | 37 | 20 |
| %D | 50 | 100 |
| %tau | 8 | 30 |
| $t_2$ | 0.5 | 1 |

The following viscosities (in ..) were obtained:

| Salad oil | measurement I | measurement II |
| --- | --- | --- |
| A | 40 | 79 |
| B | 33 | 62 |
| C | 54 | 107 |

The conditions applied for the measurement at 37°C were chosen so as to resemble in-mouth temperature and mastication conditions.

The above results confirm the findings of the test panel.

Example 4

Three salad oils were prepared from the following ingredients ( in % by weight of the salad oil):

|  | Salad oil | | |
| --- | --- | --- | --- |
|  | A | B | C |
| Dante[TM] Extravergine Oliva [1] | 10 | 10 | 10 |
| Refined olive oil | 90 | | |
| Soybean oil | | 90 | 55 |
| Sucrose fatty acid polyester [2] | | | 35 |

[1] Unrefined olive oil ex. van de Bergh & Jurgens, Crema, Italy.

[2] Sucrose fatty acid polyester obtained by esterification of sucrose with fatty acids derived from soybean oil; degree of esterification over 95 %

The same test panel as in Example 4 was asked to rank the salad oils in order of viscosity. According to all panel members salad oil C scored the highest viscosity. Five members found sample A to have a higher viscosity than sample B. One member found sample B to have the higher viscosity.

Example 5

Three salad oils were prepared from the following ingredients ( in % by weight of the salad oil):

|  | Salad oil | | |
| --- | --- | --- | --- |
|  | A | B | C |
| Dante[TM] Extravergine Oliva [1] | 10 | 10 | 10 |
| Refined olive oil | 90 | | |
| Soybean oil | | | 70 |
| Sunflower oil | | 60 | |
| Sucrose fatty acid polyester [2] | | 30 | 20 |

[1] Unrefined olive oil ex. van de Bergh & Jurgens, Crema, Italy.

[2] Sucrose fatty acid polyester obtained by esterification of sucrose with fatty acids derived from soybean oil; degree of esterification over 95 %

The viscosity of the above salad oils was measured by means of a Haake [TM] viscometer, using the conditions/adjustments described in Example 3. The following results were obtained:

| Salad oil | measurement I | measurement II |
| --- | --- | --- |
| A | 40 | 79 |
| B | 47 | 93 |
| C | 43 | 80 |

## Claims

1. Fatty composition containing more than 50 wt.% fat, comprising, calculated by weight of fat:
   (a) 0.5 to 40 % unrefined olive oil;
   (b) 5 to 80 % polyol fatty acid polyesters; and optionally
   (c) less than 84.5 % refined triglyceride oil.

2. Composition according to claim 1, wherein the composition comprises, calculated by weight of fat:
   (a) 0.8 to 25 % unrefined olive oil;
   (b) 15 to 50 % polyol fatty acid polyesters; and optionally
   (c) less than 74.2 % of refined triglyceride oil.

3. Composition according to claim 2, wherein the composition comprises, calculated by weight of fat:
   (a) 1.0 to 23 % unrefined olive oil;
   (b) 16 to 45 % polyol fatty acid polyesters; and
   (c) 32 to 83 % refined triglyceride oil.

4. Fatty composition according to any one of claims 1 to 3, wherein the refined triglyceride oil comprises less than 80 wt.% refined olive oil.

5. Composition according to any one of claims 1 to 4, wherein the composition contains more than 90 wt.% fat.

6. Composition according to any one of claims 1 to 5, wherein the unrefined olive oil has an acidity expressed as free oleic acid of less 3 wt.%.

7. Composition according to any one of claims 1 to 6, wherein the refined triglyceride oil has a slip melting point of less than 20°C, preferably of less than 12°C.

8. Composition according to any one of claims 1 to 7, wherein the composition at a temperature of 20°C is a transparent liquid displaying essentially no crystalline fat in the form of solid fat particles that are perceptible to the eye.

9. Use of polyol fatty acid polyesters as a replacement for refined olive oil in olive oil based fatty compositions which contain from 0.5 to 40% of unrefined olive oil.

10. Use of a composition according to any one of claims 1 to 8 as a salad oil.

## Patentansprüche

1. Fettzusammensetzung, die mehr als 50 Gew.-% Fett enthält und die, berechnet auf das Gewicht des Fettes, umfaßt:
   (a) 0,5 bis 40 % unraffiniertes Olivenöl,
   (b) 5 bis 80 % Polyolfettsäurepolyester und fakultativ
   (c) weniger als 84,5 % raffiniertes Triglyceridöl.

2. Zusammensetzung nach Anspruch 1, worin die Zusammensetzung, berechnet auf das Gewicht des Fettes, umfaßt:
   (a) 0,8 bis 25 % unraffiniertes Olivenöl,
   (b) 15 bis 50 % Polyolfettsäurepolyester und fakultativ
   (c) weniger als 74,2 % raffiniertes Triglyceridöl.

3. Zusammensetzung nach Anspruch 2, worin die Zusammensetzung, berechnet auf das Gewicht des Fettes, umfaßt:
   (a) 1,0 bis 23 % unraffiniertes Olivenöl,
   (b) 16 bis 45 % Polyolfettsäurepolyester und
   (c) 32 bis 83 % raffiniertes Triglyceridöl.

4. Fettzusammensetzung nach irgendeinem der Ansprüche 1 bis 3, worin das raffinierte Triglyceridöl weniger als 80 Gew-% raffiniertes Olivenöl umfaßt.

5. Zusammensetzung nach irgendeinem der Ansprüche 1 bis 4, worin die Zusammensetzung mehr als 90 Gew.-% Fett enthält.

6. Zusammensetzung nach irgendeinem der Ansprüche 1 bis 5, worin das unraffinierte Olivenöl eine Azidität, ausgedrückt als freie Ölsäure, von weniger als 3 Gew.-% hat.

7. Zusammensetzung nach irgendeinem der Ansprüche 1 bis 6, worin das raffinierte Triglyceridöl einen Steigschmelzpunkt von weniger als 20°C, vorzugsweise von weniger als 12°C, hat.

8. Zusammensetzung nach irgendeinem der Ansprüche 1, bis 7, worin die Zusammensetzung bei einer Temperatur von 20°C eine durchsichtige Flüssigkeit ist, die im wesentlichen kein kristallines Fett in Form vom Auge wahrnehmbarer fester Fetteilchen zeigt.

9. Verwendung von Polyolfettsäurepolyestern als Ersatz für raffiniertes Olivenöl in Fettzusammensetzungen auf Olivenölgrundlage, die 0,5 bis 40 % unraffiniertes Olivenöl enthalten.

10. Verwendung einer Zusammensetzung nach irgendeinem der Ansprüche 1 bis 8 als Salatöl.


**Revendications**

1. Composition de graisse contenant plus de 50°; en poids de graisse, qui comprend par rapport au poids de la graisse :
   (a) de 0,5 à 40%: d'huile d'olive non raffinée ;
   (b) de 5 à 80%: de polyesters d'acides gras de polyols ; et, facultativement
   (c) moins de 84,5%: d'huile de triglycérides raffinée.

2. Composition selon la revendication 1, qui comprend par rapport au poids de la graisse :
   (a) de 0,8 à 25% d'huile d'olive non raffinée ;
   (b) de 15 à 50% de polyesters d'acides gras de polyols ; et, facultativement
   (c) moins de 74,2% d'huile de triglycérides raffinée.

3. Composition selon la revendication 2, qui comprend par rapport au poids de la graisse :
   (a) de 1,0 à 23% d'huile d'olive non raffinée ;
   (b) de 16 à 45% de polyester d'acides gras de polyols ; et
   (c) de 32 à 83% d'huile de triglycérides raffinée.

4. Composition grasse selon l'une quelconque- des revendications 1 à 3, dans laquelle l'huile de triglycérides comprend moins de 80% en poids d'huile d'olive raffinée.

5. Composition selon l'une quelconque des revendications 1 à 4, qui contient plus de 90% en poids de graisse.

6. Composition selon l'une quelconque des revendications 1 à 5, dans laquelle l'huile d'olive non raffinée présente une acidité exprimée en acide oléique libre de moins de 3% en poids.

7. Composition selon l'une quelconque des revendications 1 à 6, dans laquelle l'huile de triglycérides raffinée présente un point de fusion de glissement inférieur à 20°C, de préférence inférieur à 12°C.

8. Composition selon l'une quelconque des revendications 1 à 7, qui, à une température de 20°C, est un liquide transparent ne contenant pratiquement pas de graisse cristalline sous forme de particules solides de graisse qui sont perceptibles à l'oeil.

9. Utilisation de polyesters d'acides gras de polyols en remplacement de l'huile d'olive raffinée dans les compositions grasses à base d'huile d'olive qui contiennent de 0,5 à 40% d'huile d'olive non raffinée.

10. Utilisation d'une composition selon l'une quelconque des revendications 1 à 8, en qualité d'huile à salade.